# EUROPÄISCHE PATENTSCHRIFT

(11) **EP 1 924 181 B1**
(45) Veröffentlichungstag und Bekanntmachung des Hinweises auf die Patenterteilung: **03.12.2014**
(21) Anmeldenummer: 06793008.1
(22) Anmeldetag: 25.08.2006
(51) Int. Cl.: A47L 9/00, B60B 33/00

(54) **ROLLENSYSTEM ZUM BEWEGEN VON GEGENSTÄNDEN ÜBER VERSCHMUTZTE BÖDEN**
ROLLER SYSTEM FOR MOVING OBJECTS OVER DIRTY FLOORS
SYSTEME DE ROULEMENT PERMETTANT DE DEPLACER DES ARTICLES SUR DES SOLS SALES

(30) Priorität: 02.09.2005 DE 102005041868
(43) Veröffentlichungstag der Anmeldung: 28.05.2008
(73) Patentinhaber: BSH Bosch und Siemens Hausgeräte GmbH, 81739 München (DE)
(72) Erfinder: GÖPPNER, Thomas, 97616 Salz (DE); KEMMERZELL, Wolfgang, 36129 Gersfeld (DE); WEIGAND, Artur, 97618 Niederlauer (DE)
(86) Internationale Anmeldenummer: PCT/EP2006/065672
(87) Internationale Veröffentlichungsnummer: WO 2007/025935

(56) Entgegenhaltungen:
- WO-A-99/44486
- WO-A-2005/079650
- DE-U1- 8 609 798
- GB-A- 2 344 751
- JP-A- 3 186 239
- US-A1- 2005 183 229

## Beschreibung

Die Erfindung geht aus von einem Rollensystem zum Bewegen von Gegenständen über verschmutzte Böden nach dem Oberbegriff von Anspruch 1.

Solche Rollensysteme werden bei Reinigungsgeräten z. B. bei fahrbaren Staubsaugern, insbesondere aber bei Staubsaugerdüsen, verwendet. Rollen werden bei Staubsaugerdüsen eingesetzt, um den Widerstand zu verringern, der beim Schieben der Düse über die verschmutzten Böden entsteht. Insbesondere bei der Pflege von glatten Bodenbelägen und kurzflorigen Teppichböden haben sich diese mit Rollen versehenen Düsen bewährt.

Aus der internationalen Offenlegungsschrift WO 2005/079650 A1 ist ein Reinigungsgerät mit Antriebsmitteln bekannt, wobei die Antriebsmittel in einem Fahrmodus oder in einem Drehmodus betrieben werden können. Das Reinigungsgerät weist ein Fahrgestell auf, durch dessen Gehäuse jeweils ein unterer Teil zweier motorisch antreibbarer Räder hindurchragt. Die Räder sind über Zahnräder mit einer Welle eines Motors verbunden. Wenn die Räder aufgrund eines dem Reinigungsgerät im Wege stehenden Hindernisses an einer Rotation gehindert sind, wird durch die Motorwelle das Fahrgestell gedreht, bis die Räder sich wieder drehen können und das Reinigungsgerät sich in einer Richtung von dem Hindernis weg bewegt. Ferner sind an einem Grundkörper des Reinigungsgeräts zwei nicht angetriebene Räder angeordnet.

Gemäß US 2005/0183229 umfasst ein Reinigungsgerät Antriebsräder, die von Motoren angetrieben werden, sowie ein mitbewegtes Rad. Das Reinigungsgerät umfasst ferner eine Düse und eine Staubkammer. Nahe einer Kopplungsöffnung, mit der die Staubkammer an ein Staubtransportrohr angeschlossen ist, ist ein Fotodetektor angeordnet, der den Füllungszustand der Staubkammer registriert. Bei gefüllter Staubkammer werden die Motoren zur Ausführung einer kreisförmigen Bewegung des Reinigungsgeräts betrieben, um einem Benutzer anzuzeigen, dass die Staubkammer gefüllt ist.

Es hat sich jedoch herausgestellt, dass bei längerem Gebrauch die Rollen verschmutzen und dabei immer schwergängiger werden, oder sogar ganz blockieren. Um die Verschmutzung zu beseitigen muss die Düse auseinandergebaut werden oder aber Schmutz und Flusen mit einem spitzen Gegenstand aus Spalten und Lagern entfernt werden.

Die Aufgabe der Erfindung war es, ein Rollensystem so auszubilden, dass das Verschmutzen der Rollen, Spalten und Lager verhindert oder zumindest verringert wird und so aufwändige Reinigungsarbeiten an den Rollen entfallen können und wobei das Rollensystem bei langflorigen Teppichböden eine Erhöhung des Schiebewiderstandes verbindert.

Gelöst wird die Aufgabe durch ein Rollensystem zum Bewegen von Gegenständen über verschmutzte Böden mit den Kennzeichen von Anspruch 1. Durch die erfindungsgemäße Abdeckung werden das Lager der Rolle, Hohlräume und Spalte der Grundfläche der Staubsaugerdüse vor dem Eindringen von Schmutz geschützt. Zwischen der Öffnung in der Abdeckung und der Rolle, die durch die Öffnung ragt, bleibt nur ein minimaler Spalt, durch den nur wenige Schmutzpartikel eindringen können. Schmutzpartikel die sich auf der Lauffläche der Rolle ablagern, werden von einer die Öffnung begrenzenden Kante entfernt, wenn, bedingt durch die Rotation der Rolle, die Verschmutzung auf der Lauffläche an dieser Kante vorbeibewegt wird.

Hierbei wirkt sich ein gewisses Spiel im Lager der Rolle positiv aus. Wird die Staubsaugerdüse in eine Richtung bewegt, verschiebt sich die Rolle in ihrem Lager in die entgegengesetzte Richtung. Auf diese Weise wird der Spalt zwischen Abdeckung und Lauffläche der Rolle auf der Seite, auf der die Lauffläche in die Abdeckung hineinläuft geringer, während der Spalt auf der gegenüberliegenden Seite vergrößert wird. Daraus ergibt sich, dass der Spalt auf der Seite, auf der die Lauffläche der Rolle in die Abdeckung hineinläuft, immer kleiner ist als auf der Seite, auf der die Lauffläche der Rolle aus der Abdeckung wieder herausläuft. Dies hat zur Folge, dass an der Lauffläche anhaftende Schmutzpartikel immer an der Außenseite der Abdeckung abgeschabt werden, noch bevor die Lauffläche unter die Abdeckung hineinläuft. Sollten fest anhaftende Schmutzpartikel beim Einlaufen der Lauffläche der Rolle einmal nicht abgeschabt werden, kann sicher davon ausgegangen werden, dass sie auch beim Auslaufen der Lauffläche, nicht auf der Innenseite der Abdeckung abgeschabt werden, da der auslaufseitige Spalt immer größer als der einlaufseitige Spalt ist. Hiermit wird sicher verhindert, dass sich der Raum unter der Abdeckung im Laufe der Zeit mit Schmutzpartikeln füllt und auf diese Weise für eine Schwergängigkeit der Rolle sorgt.

Wird die Staubsaugerdüse zur Pflege von langflorigen Teppichböden verwendet, deren Flor länger als der Vorstand der Rolle aus der Abdeckung ist, können die Rollen nicht mehr viel zur Verringerung des Schiebewiderstandes beitragen. In diesem Fall darf die Rolle aber nicht als zusätzlicher Widerstand wirken, indem sie beispielsweise eine hervorstehende Stufe bildet. Die Abdeckung weist daher in Bewegungsrichtung zwei keilförmige Rampen auf. Diese Rampen sind mit ihrer Breitseite an die Breite der Lauffläche der Rolle angepasst und enden direkt an der Öffnung, aus der die Rolle hervorragt. Zur Grundfläche der Staubsaugerdüse hin laufen die Rampen spitz zusammen. Die Rampen wirken so als Gleitfläche und verhindern dadurch eine größere Erhöhung des Schiebewiderstandes.

Um zu verhindern, dass Flusen und Schmutzpartikel mit der Lauffläche der Rolle in Berührung kommen und sich so daran festsetzen können, sind beidseitig, der durch die Rampen gebildeten Gleitflächen, schräge Dreiecksflächen vorgesehen. Auf diese Weise werden Flusen und Schmutzpartikel, von der Spitze der Rampen her, seitlich über die Dreiecksflächen abgeleitet, so dass für die nachfolgende Rolle eine freie Spur geschaffen wird.

Die Seitenflächen der Abdeckung, die jeweils eine vordere und hintere Dreiecksfläche miteinander verbinden, sind ebenfalls schräg angestellt. Auch durch diese Maßnahme werden nochmals die Gleiteigenschaften der Düse auf hochflorigem Teppichboden verbessert.

Die Öffnung in der Abdeckung, durch welche die Rolle hervorragt, wird folglich vorne und hinten, durch je eine Kante der Gleitflächen an den keilförmigen Rampen und seitlich durch je eine Seitenkante der Seitenflächen gebildet. Um ein Eindringen von Schmutz unter die Abdeckung zu verhindern, sollen die Spaltmaße zwischen Öffnung und Rolle 0,5 mm nicht überschreiten.

Ein besonders vorteilhafter Effekt ergibt sich, wenn die die Öffnung bildenden Kanten, der durch die Rampen gebildeten Gleitflächen, tangential an die Lauffläche der Rolle herangeführt sind. Hierdurch können bereits anhaftende Schmutzpartikel von der Lauffläche der Rolle abgeschabt werden, ohne dass sich dabei eine nennenswerte Erhöhung des Widerstandes bei der Rotation der Rolle ergibt.

Die Abdeckung kann so ausgebildet sein, dass sie an der Grundfläche der Düse angebracht werden kann. Dies kann beispielsweise über einen Klickverschluss erfolgen, bei dem an die Abdeckung angespritzte Kunststoffhaken in Öffnungen in der Grundfläche einrasten. Vorteilhafterweise wird die Abdeckung jedoch einstückig mit der Düse ausgebildet. Dies kann z. B. dadurch erreicht werden, dass die Abdeckung als Ausbuchtung der Grundfläche der Düse vorgesehen ist und die Grundfläche der Düse mit dieser Ausbuchtung als Spritzgussteil gefertigt wird.

Das erfindungsgemäße Rollensystem ist hier anhand einer Staubsaugerdüse beschrieben. Es ist jedoch ebenso bei Staubsaugerrädern, Lenkrollenrädern für Staubsauger und Rädern für andere Bodenreinigungsgeräte, die sich über verschmutze Oberflächen bewegen, einsetzbar.

Die Erfindung wird im Folgenden anhand der Zeichnung näher erläutert. Es zeigen:
Abb. 1 eine perspektivische Ansicht des erfindungsgemäßen Rollensystems und
Abb. 2 einen Schnitt durch das erfindungsgemäße Rollensystem.

Die Rolle 1 ist über die Achse 10 und einem hier nicht gezeigten Lager in einer Staubsaugerdüse gelagert. Die Grundfläche der Stäubsaugerdüse ist mit dem Bezugszeichen 9 abgedeutet. Die Rolle 1 besitzt eine Lauffläche 2, mit der sie mit dem zu reinigenden Untergrund in Berührung kommt. Die Abdeckung 3, 4, 5 setzt sich aus mehreren dreieckigen Flächen 3, 4 und zwei trapezförmigen Seitenflächen 5 zusammen. Die Flächen 3 und 5 begrenzen eine Öffnung, durch welche die Rolle 1 herausragt. Durch die aneinandergrenzenden Dreiecksflächen 3 und 4 werden vor und hinter der Rolle 1 jeweils keilförmige Rampen gebildet, die über die Seitenflächen 5 miteinander verbunden sind. Die Seitenflächen 5 weisen eine auf die Rolle gerichtete Kante 6 auf. Ebenso weisen die Dreiecksflächen 3 je eine den Rollen zugewandte Kante 7 bzw. 8 auf, welche die hintere bzw. vordere Begrenzung der Öffnung in der Abdeckung bilden.

Zwischen der Öffnung in der Abdeckung und der Rolle 1, die durch die Öffnung ragt, bleibt nur ein minimaler Spalt, der nicht größer als 0,5 mm sein sollte. Schmutzpartikel die sich auf der Lauffläche 2 der Rolle 1 ablagern, werden von der Kante 7 bzw. 8 entfernt, wenn bei der Drehung der Rolle 1 die Verschmutzung auf der Lauffläche 2 an der Kante 7 bzw. 8 vorbeibewegt wird.

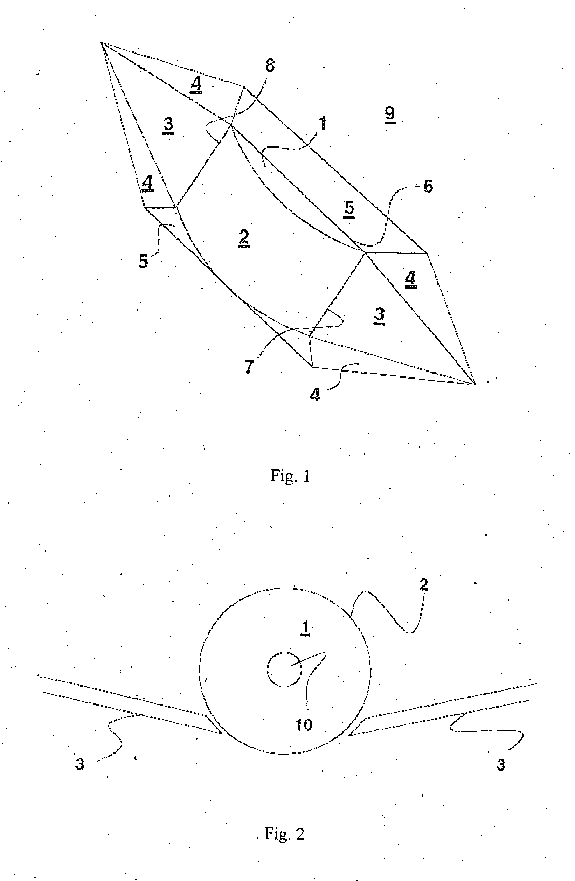

Ein gewisses Spiel im Lager der Rolle 1 wirkt sich hierbei positiv aus. Wird die Staubsaugerdüse in Abb. 1 nach rechts unten oder in Abb. 2 nach rechts bewegt, verschiebt sich die Rolle 1 im Rahmen des Lagerspiels in die entgegengesetzte Richtung. Auf diese Weise wird der Spalt zwischen der Kante 8 und Lauffläche 2 der Rolle 1, also auf der Seite, auf der die Lauffläche 2 in die Abdeckung hineinläuft, geringer, während der Spalt auf der gegenüberliegenden Seite, also zwischen der Rolle 1 und der Kante 7, vergrößert wird. Daraus ergibt sich, dass der Spalt auf der Seite, auf der die Lauffläche 2 der Rolle 1 in die Abdeckung hineinläuft, immer kleiner ist als auf der Seite, auf der die Lauffläche 2 der Rolle 1 aus der Abdeckung wieder herausläuft. Dies hat zur Folge, dass an der Lauffläche 2 anhaftende Schmutzpartikel immer an der Außenseite der Abdeckung an der Kante 8 abgeschabt werden, noch bevor die Lauffläche 2 unter die Abdeckung hineinläuft. Sollten fest anhaftende Schmutzpartikel beim Einlaufen der Lauffläche 2 der Rolle 1 einmal von der Kante 8 nicht abgeschabt werden, kann sicher davon ausgegangen werden, dass sie auch beim Auslaufen der Lauffläche 2, nicht auf der Innenseite der Abdeckung von der Kante 7 abgeschabt werden, da der auslaufseitige Spalt immer größer als der einlaufseitige Spalt ist. Hiermit wird sicher gewährleistet, dass sich der Raum unter der Abdeckung im Laufe der Zeit nicht mit Schmutzpartikeln füllt und auf diese Weise nicht für eine Schwergängigkeit der Rolle sorgt.

Bei langflorigen Teppichböden, können die Rollen nicht mehr viel zur Verringerung des Schiebewiderstandes beitragen. In diesem Fall darf die Rolle 1 oder deren Lager aber nicht als zusätzlicher Widerstand wirken, indem sie beispielsweise eine hervorstehende Stufe bildet. Die Abdeckung weist daher die aus den Dreiecksflächen 3, 4 gebildeten keilförmigen Rampen auf. Diese Rampen sind mit ihrer Breitseite an die Breite der Lauffläche 2 der Rolle 1 angepasst und enden direkt an der Öffnung, aus der die Rolle 1 hervorragt. Zur Grundfläche 9 der Staubsaugerdüse hin laufen die Rampen spitz zusammen. Die Rampen wirken so als Gleitfläche und verhindern dadurch eine größere Erhöhung des Schiebewiderstandes.

Um zu verhindern, dass Flusen und Schmutzpartikel mit der Lauffläche 2 der Rolle 1 in Berührung kommen und sich so daran festsetzen können, sind die schrägen Dreiecksflächen 4 vorgesehen. Flusen und Schmutzpartikel werden so von der Spitze der Rampen her, seitlich über die Dreiecksflächen 4 abgeleitet, so dass die Rolle 1 in einer flusenfreien Spur läuft.

Die Gleiteigenschaften der Düse auf hochflorigem Teppichboden werden nochmals durch die Schrägstellung der trapezförmigen Seitenflächen 5 der Abdeckung verbessert.

Die Öffnung in der Abdeckung, durch welche die Rolle 1 hervorragt, wird folglich vorne und hinten, durch je eine Kante 7 und 8 der Dreiecksflächen 3 und seitlich durch je eine Kante der Seitenflächen 5 gebildet. Um ein Eindringen von Schmutz unter die Abdeckung zu verhindern, sollen die Spaltmaße zwischen diesen Kanten und der Rolle 1 möglichst klein gehalten werden.

Ein besonders vorteilhafter Effekt ergibt sich, wenn die Dreiecksflächen 3 möglichst tangential an die Läuffläche 2 der Rolle 1 herangeführt werden. Hierdurch können bereits anhaftende Schmutzpartikel von den. Lauffläche 2 der Rolle abgeschabt werden, ohne dass sich dabei eine nennenswerte Erhöhung des Drehwiderstandes der Rolle 1 ergibt.

Vorteilhafterweise wird die Abdeckung einstückig mit der Düse ausgebildet. Dies kann z. B. dadurch erreicht werden, dass die Abdeckung als Ausbuchtung der Grundfläche 9 der Düse vorgesehen ist und die Grundfläche 9 der Düse mit dieser Ausbuchtung als Spritzgussteil gefertigt wird.

## Patentansprüche

1. Rollensystem zum Bewegen von Gegenständen über verschmutzte Böden mit einer Rolle (1) mit einer Lauffläche (2) und einem Lager, mit dem die Rolle (1) drehbar an dem Gegenstand befestigt ist, wobei eine Abdeckung (3, 4, 5) vorgesehen ist, die eine Öffnung für die Rolle (1) aufweist, und wobei die Form der Öffnung an die Kontur der Rolle (1) angepasst ist und die Größe der Öffnung so ausgelegt ist, dass die Breite der Öffnung an die Breite der Rolle (1) angepasst ist und die Länge der Öffnung kleiner als der Durchmesser der Rolle (1) ist, **dadurch gekennzeichnet, dass** die Abdeckung (3, 4, 5) zwei gegenüberliegende keilförmige Rampen aufweist, deren Spitzen an einer Grundfläche des Gegenstands anliegen und die mit ihrer Breitseite zu der Lauffläche (2) der Rolle (1) führen.

2. Rollensystem nach Anspruch 1, **dadurch gekennzeichnet, dass** die keilförmigen Rampen beidseitig durch schräge Dreiecksflächen (3, 4) begrenzt sind.

3. Rollensystem nach Anspruch 2, **dadurch gekennzeichnet, dass** jeweils zwei Dreiecksflächen (3, 4) durch eine ebenfalls schräge Seitenfläche (5) miteinander verbunden sind, wobei jede Seitenfläche (5) mit einer freien Seite eine Kante der Öffnung bildet und mit der anderen freien Seite an der Grundfläche des Gegenstands anliegt.

4. Rollensystem nach Anspruch 1, **dadurch gekennzeichnet, dass** der Abstand zwischen der Lauffläche (2) der Rolle (1) und einer Kante der Öffnung nicht größer als 0,5 mm ist.

5. Rollensystem nach Anspruch 1, **dadurch gekennzeichnet, dass** die keilförmigen Rampen mit ihrer Breitseite nahezu tangential an die Lauffläche (2) der Rolle (1) herangeführt sind.

6. Rollensystem nach Anspruch 1, **dadurch gekennzeichnet, dass** die Abdeckung (3, 4, 5) einstückig mit zumindest einem Teil des Gegenstands verbunden ist.

7. Rollensystem nach Anspruch 1, **dadurch gekennzeichnet, dass** der Gegenstand eine Staubsaugerdüse ist.

8. Rollensystem nach Anspruch 1, **dadurch gekennzeichnet, dass** das Lager der Rolle (1) Spiel aufweist.

## Claims

1. Roller system for moving objects over dirty floors, with a roller (1) having a running surface (2) and a bearing with which the roller (1) is attached rotatably to the object, wherein a cover (3, 4, 5) is provided which has an opening for the roller (1), and wherein the shape of the opening is adapted to the contour of the roller (1) and the size of the opening is designed so that the width of the opening is adapted to the width of the roller (1) and the length of the opening is smaller than the diameter of the roller (1), **characterised in that** the cover (3, 4, 5) has two opposing wedge-shaped ramps, the tips of which rest against a base surface of the object and which, with their wide side, lead to the running surface (2) of the roller (1).

2. Roller system according to claim 1, **characterised in that** the wedge-shaped ramps are delimited on both sides by sloping triangular surfaces (3, 4).

3. Roller system according to claim 2, **characterised in that** two triangular surfaces (3, 4) are connected to one another in each case by a likewise sloping side surface (5), wherein each side surface (5) forms an edge of the opening with one free side and rests against the base surface of the object with its other free side.

4. Roller system according to claim 1, **characterised in that** the distance between the running surface (2) of the roller (1) and an edge of the opening is not greater than 0.5 mm.

5. Roller system according to claim 1, **characterised in that** the wedge-shaped ramps are guided with their wide side almost tangentially against the running surface (2) of the roller (1).

6. Roller system according to claim 1, **characterised in that** the cover (3, 4, 5) is a one-piece cover connected to at least a part of the object.

7. Roller system according to claim 1, **characterised in that** the object is a vacuum cleaner nozzle.

8. Roller system according to claim 1, **characterised in that** there is play in the bearing of the roller (1).

## Revendications

1. Système de roulement permettant de déplacer des objets sur des sols souillés, comprenant un rouleau (1) muni d'une surface de roulement (2) et d'un palier, avec lequel le rouleau (1) est fixé de manière rotative sur l'objet, un recouvrement (3, 4, 5) étant ménagé, lequel présente une ouverture pour le rouleau (1), la forme de l'ouverture étant adaptée au contour du rouleau (1) et la taille de l'ouverture étant conçue de manière à ce que la largeur de l'ouverture soit adaptée à la largeur du rouleau (1) et que la longueur de l'ouverture soit plus petite que le diamètre du rouleau (1), **caractérisé en ce que** le recouvrement (3, 4, 5) présente deux rampes opposées en forme de coin, dont les pointes sont adjacentes à une surface de base de l'objet et lesquelles mènent vers la surface de roulement (2) du rouleau (1) avec leur côté large.

2. Système de roulement selon la revendication 1, **caractérisé en ce que** les rampes en forme de coin sont limitées de chaque côté par des surfaces triangulaires inclinées (3, 4).

3. Système de roulement selon la revendication 2, **caractérisé en ce que** respectivement deux surfaces triangulaires (3, 4) sont reliées entre elles par une surface latérale (5) également inclinée, chaque surface latérale (5) formant avec un côté libre une arête de l'ouverture et étant adjacente à la surface de base de l'objet avec l'autre côté libre.

4. Système de roulement selon la revendication 1, **caractérisé en ce que** l'écart entre la surface de roulement (2) du rouleau (1) et une arête de l'ouverture n'est pas plus grand que 0,5 mm.

5. Système de roulement selon la revendication 1, **caractérisé en ce que** les rampes en forme de coin sont menées avec leur côté large quasi tangentiellement sur la surface de roulement (2) du rouleau (1).

6. Système de roulement selon la revendication 1, **caractérisé en ce que** le recouvrement (3, 4, 5) est relié d'une seule pièce avec au moins une partie de l'objet.

7. Système de roulement selon la revendication 1, **caractérisé en ce que** l'objet est une buse d'aspirateur.

8. Système de roulement selon la revendication 1, **caractérisé en ce que** le palier du rouleau (1) présente du jeu.
